# EUROPEAN PATENT APPLICATION

(11) **EP 4 446 051 A1**
(43) Date of publication of application: **16.10.2024**
(21) Application number: 22924093.2
(22) Date of filing: 29.11.2022
(51) Int. Cl.: B23Q 15/00, G05B 19/4067, G05B 19/4068, G05B 19/4093, G05B 19/4155

(54) **NUMERICAL CONTROL APPARATUS**

(30) Priority: 25.01.2022 JP 2022009274
(71) Applicant: DMG Mori Co., Ltd., Yamatokoriyama-shi, Nara 639-1160 (JP)
(72) Inventor: TSUCHIMOCHI, Koji, Yamatokoriyama-shi, Nara 639-1160 (JP)
(74) Representative: Isarpatent
(86) International application number: PCT/JP2022/043953
(87) International publication number: WO 2023/145241

(57) **Abstract**

A numerical control apparatus (10) includes a program storage (16), a display device (21), an automatic-operation control unit (13), a suspending operation unit (12), a program manipulation unit (15), and an automatic-operation monitoring unit (14). The automatic-operation monitoring unit (14) monitors an execution state of the automatic-operation control unit (13). At a time of resumption of execution of an NC program after suspension of the execution of the NC program by the suspending operation unit (12), the automatic-operation monitoring unit (14) checks whether a resumption block containing a character designated in the program manipulation unit (15) immediately before the resumption is a preset resumable block or not. When the resumption block is the resumable block, processing in the automatic-operation control unit (13) is resumed from the resumption block, while when the resumption block is not the resumable block, the processing is halted.

## Description

### Technical Field

0001 The present invention relates to a numerical control apparatus that numerically controls a motion mechanism unit of a machine tool.

### Background Art

0002 A numerical control apparatus for a machine tool is configured to numerically control a motion mechanism unit of the machine tool by executing an NC program created for machining.

0003 In most cases, such a created NC program initially has room for improvement. Such an NC program is usually modified to a more suitable tool path or a more suitable machining condition that have been found out through trial machining and subsequent use. In this process, the contents of the NC program that is stored in the numerical control apparatus are modified (edited) by a program editing function provided in the numerical control apparatus under operation by an operator.

0004 For example, in a case where a tool path error is found during trial machining or in a case where the need to reset a machining condition arises during trial machining, the NC program is modified as necessary and then the machining is resumed from the modified point of the machining. In such a case, the operator has to resume the machining from an appropriate point in the NC program. For example, if the machining is resumed from an inappropriate point due to carelessness of the operator, a serious problem such as interference between the tool and the workpiece may occur.

0005 Accordingly, for example, a midway start method as disclosed in Japanese Unexamined Patent Application Publication No. H5-158518 (Patent Literature 1 listed below) has been proposed. This method is configured to select a particular block as a midway start block out of the blocks of the machining program (NC program) to execute the machining program from the selected midway start block. In the selection of the midway start block, a tool command block describing a tool change command is extracted from the machining program, and a tool number or a tool offset number commanded in the extracted tool command block is displayed for each tool command block. Thereafter, a particular tool number or tool offset number is selected out of the displayed tool numbers or tool offset numbers, whereby the tool command block commanding the selected tool number or tool offset number is selected as the midway start block.

0006 In this conventional midway start method, the tool number or tool offset number of the tool to be used in a desired machining process is selected by a cursor key or the like out of tool numbers or tool offset numbers displayed on a screen. Thereby, the machining is resumed from the tool command block commanding the selected tool number or tool offset number, that is to say, from the head block of the desired machining process.

### Citation List

### Patent Literature

0007 Patent Literature 1: Japanese Unexamined Patent Application Publication No. H5-158518

### Summary of Invention

### Technical Problem

0008 However, the above-described conventional midway start method has the following problems. In the above-described conventional midway start method, to resume the machining from a midway point of the machining program, it is necessary to execute the operations of 1) extracting from the machining program a tool command block describing a tool change command, 2) displaying for each extracted tool command block the tool number or tool offset number commanded in the tool command block, and 3) causing the operator to select a particular tool number or tool offset number out of the displayed tool numbers or tool offset numbers. This midway start method has the problems that the processing for the resumption in the controller is excessive and that the operator needs to be familiar with the tools to be used in the machining processes.

0009 The operator operating the machine tool may not be sufficiently familiar with the machining processes. Such an operator may be incapable of selecting a correct tool when resuming the machining after suspending the machining and manipulating the machining program.

0010 In a case where an operator who is not sufficiently familiar with the machining processes suspends the machining and then shifts the controller to the machining program editing mode to manipulate the machining program, if a determination for resuming the machining, for example, a determination whether the machining program block that was under execution at the time of the suspension of the machining is a machining resumable block or not, is made without relying on the operator's judgment, interference between the tool and the workpiece will be reliably avoided. This is beneficial.

0011 The present invention has been achieved in view of the above-described circumstances, and an object of the invention is to provide a numerical control apparatus capable of reliably avoiding interference between the tool and the workpiece even when an operator who is not sufficiently familiar with the machining processes performs the machining resuming operation.

### Solution to Problem

0012 To solve the above-described problem, the present invention provides a numerical control apparatus that numerically controls a motion mechanism unit of a machine tool and includes:
a program storage that stores an NC program constituted by a plurality of blocks describing NC codes;
a display device that displays at least the NC program in characters;
an automatic-operation control unit that executes the NC program stored in the program storage to operate the motion mechanism unit under numerical control;
a suspending operation unit that suspends execution of the NC program by the automatic-operation control unit during the execution of the NC program and then resumes the execution of the NC program; and
a program manipulation unit that, when processing in the automatic-operation control unit is suspended by the suspending operation unit, with respect to the NC program under execution displayed on the display device, enables manipulation of character display on the display device with a displayed character designated or enables editing of the NC program, wherein:
   the numerical control apparatus includes an automatic-operation monitoring unit that monitors an execution state of the automatic-operation control unit;
   at a time of resumption of the execution of the NC program after suspension of the execution of the NC program by the suspending operation unit, the automatic-operation monitoring unit checks whether a resumption block containing a character designated in the program manipulation unit immediately before the resumption is a preset resumable block or not; and
   when the resumption block is the resumable block, the automatic-operation monitoring unit resumes the processing in the automatic-operation control unit from the resumption block, while when the resumption block is not the resumable block, the automatic-operation monitoring unit halts the processing in the automatic-operation control unit.

0013 In this numerical control apparatus, the automatic-operation control unit executes the NC program stored in the program storage to numerically control the motion mechanism unit of the machine tool. Further, the suspending operation unit can suspend the execution of the NC program by the automatic-operation control unit during the execution of the NC program by the automatic-operation control unit and can resume the suspended execution of the NC program by the automatic-operation control unit. Further, when the processing in the automatic-operation control unit is suspended by the suspending operation unit, with respect to the NC program under execution displayed on the display device, the program manipulation unit enables manipulation of character display on the display device with a displayed character designated or enables editing of the NC program.

0014 Furthermore, the automatic-operation monitoring unit monitors the execution state of the automatic-operation control unit. At the time of resumption of the execution of the NC program after suspension of the execution of the NC program by the suspending operation unit, the automatic-operation monitoring unit checks whether a resumption block that contains a character designated in the program manipulation unit immediately before the resumption is a preset resumable block or not. When the resumption block is the resumable block, the automatic-operation monitoring unit resumes the processing in the automatic-operation control unit from the resumption block. When the resumption block is not the resumable block, the automatic-operation monitoring unit halts the processing in the automatic-operation control unit.

0015 In the numerical control apparatus according to the present invention, as described above, the automatic-operation monitoring unit monitors the execution state (operational state) of the automatic-operation control unit. At the time of resumption of the execution of the NC program after suspension of the execution of the NC program, the automatic-operation monitoring unit checks whether the resumption block is the resumable block or not. Accordingly, the machining is resumed only when the resumption block is the resumable block. Therefore, for example, interference between the tool and the workpiece is reliably avoided even if the operator makes an operational error. Further, the determination whether the resumption block is the resumable block or not is made without relying on the operator's judgment. Therefore, the operator does not need to be sufficiently familiar with the machining processes to be executed in the machine tool.

0016 The numerical control apparatus according to the present invention may further include a storage storing an automatic-operation resumable block set in advance for the NC program to be executed. In this case, the automatic-operation monitoring unit may be configured to, at the time of resumption of the execution of the NC program by the automatic-operation control unit, compare the resumption block with the resumable block stored in the storage and determine that the resumption block is the resumable block when the resumption block matches the resumable block stored in the storage.

0017 In the numerical control apparatus according to this aspect, the resumable block is set in advance, so that the checking whether the resumption block is the resumable block or not is carried out quickly.

0018 Alternatively, the numerical control apparatus according to the present invention may further include a storage storing an NC code defined as an automatic-operation resumable code and set in advance for the NC program to be executed. In this case, the automatic-operation monitoring unit may be configured to, at the time of resumption of the execution of the NC program by the automatic-operation control unit, check whether the resumption block contains the NC code stored in the storage or not and determine that the resumption block is the resumable block when the resumption block contains the NC code stored in the storage.

0019 In the numerical control apparatus according to this aspect, the resumable block is set in advance on an NC code basis, so that the checking whether the resumption block is the resumable block or not is carried out quickly.

0020 Further, in the present invention, it is preferred that the automatic-operation monitoring unit is further configured to output an alarm to outside when the resumption block is not the resumable block.

0021 In the numerical control apparatus according to this aspect, an alarm is output to the outside when the resumption block is not the resumable block, so that the operator can immediately recognize his/her operational error. In this case, the operator can take measures such as executing the machining program from the beginning.

### Advantageous Effects of Invention

0022 In the numerical control apparatus according to the present invention, as described above, at the time of resumption of the execution of the NC program after suspension of the execution of the NC program, it is checked whether the resumption block is the resumable block or not, and the machining is resumed only when the resumption block is the resumable block. Therefore, interference between the tool and the workpiece is reliably avoided even if the operator makes an operational error.

0023 Further, the determination whether the resumption block is the resumable block or not is made without relying on the operator's judgment. Therefore, even a low-skilled operator who has insufficient knowledge in the machining processes to be executed in the machine tool can operate the machine tool.

### Brief Description of Drawings

0024
FIG. 1 is a block diagram schematically illustrating a configuration of a machine tool according to an embodiment of the present invention;
FIG. 2 is a flowchart showing a process in an automatic-operation monitoring unit in the embodiment;
FIG. 3 is an illustrative diagram showing data stored in a resumable condition storage in the embodiment;
FIG. 4 is an illustrative diagram showing an example of an NC program used in the embodiment; and
FIG. 5 is an illustrative diagram showing data stored in the resumable condition storage in a variation according to the present invention.

### Description of Embodiments

0025 Hereinafter, a specific embodiment of the present invention will be described with reference to the drawings.

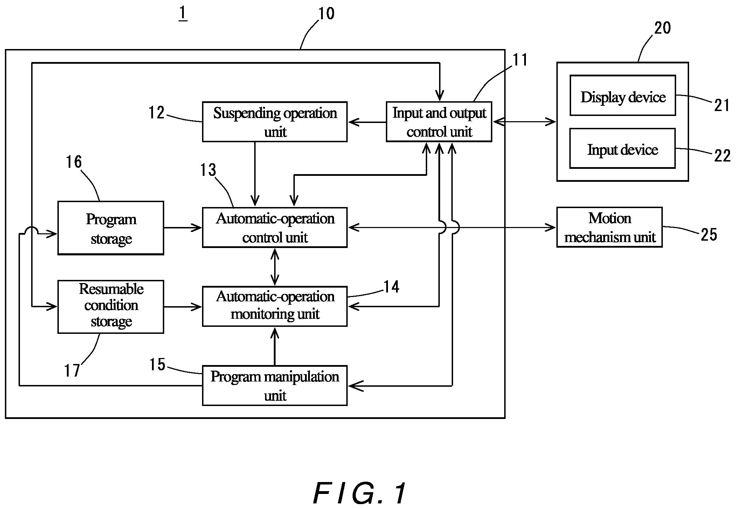

0026 As shown in FIG. 1, a machine tool 1 according to this embodiment includes a numerical control apparatus 10, an input and output device 20, and a motion mechanism unit 25. The machine tool 1 may be of any type that is conventionally known and has a configuration in which the motion mechanism unit 25 is numerically controlled by the numerical control apparatus 10. For example, the machine tool 1 may be, but not limited to, a lathe or a machining center.

0027 The motion mechanism unit 25 operates under control by the numerical control apparatus 10. For example, in the case of a lathe, the motion mechanism unit 25 includes a spindle mechanism, a feed apparatus, and a turret. The spindle mechanism is constituted by a spindle motor and a spindle to be rotated by the spindle motor. The feed apparatus includes feed motors and a carriage and a tool rest to be moved by the feed motors. The turret is attached to the tool rest. In the case of a machining center, the motion mechanism unit 25 includes a spindle mechanism and a feed apparatus. The spindle mechanism includes a spindle motor and a spindle to be driven by the spindle motor as well as a feed motor and a spindle head to be moved by the feed motor. The feed apparatus includes feed motors and a carriage and a table to be moved by the feed motors.

0028 The input and output device 20 consists of a display device 21 and an input device 22. The display device 21 may be a display that displays characters and images. The input device 22 may be a keyboard or may be implemented using a pointer displayed on a display. The display device 21 and the input device 22 may not be provided completely separately. For example, the input and output device 20 may be implemented by an integrated display and input units, such as a touch panel. Further, the input and output device 20 may be implemented by a combination of such an integrated display and input units and independent display and input units.

0029 The numerical control apparatus 10 includes an input and output control unit 11, a suspending operation unit 12, an automatic-operation control unit 13, an automatic-operation monitoring unit 14, a program manipulation unit 15, a program storage 16, and a resumable condition storage 17. Note that these elements are only those necessary for embodying the present invention and, as a matter of course, the numerical control apparatus 10 can include other functional elements.

0030 The numerical control apparatus 10 is composed of a computer including a CPU, a RAM, and a ROM. The input and output control unit 11, the suspending operation unit 12, the automatic-operation control unit 13, the automatic-operation monitoring unit 14, and the program manipulation unit 15 are functionally implemented by a computer program to execute the process described later. The program storage 16 and the resumable condition storage 17 are composed of an appropriate storage medium such as a RAM.

0031 The input and output control unit 11 is a functional unit that controls input and output in the input and output device 20. For example, the input and output control unit 11 stores into the resumable condition storage 17 data on a resumable condition input from the input device 22 and displays on the display device 21 the resumable condition stored in the resumable condition storage 17. Further, under processing by the program manipulation unit 15, which is described in detail later, the input and output control unit 11 stores into the program storage 16 an NC program input from the input device 22 and displays on the display device 21 the NC program stored in the program storage 16.

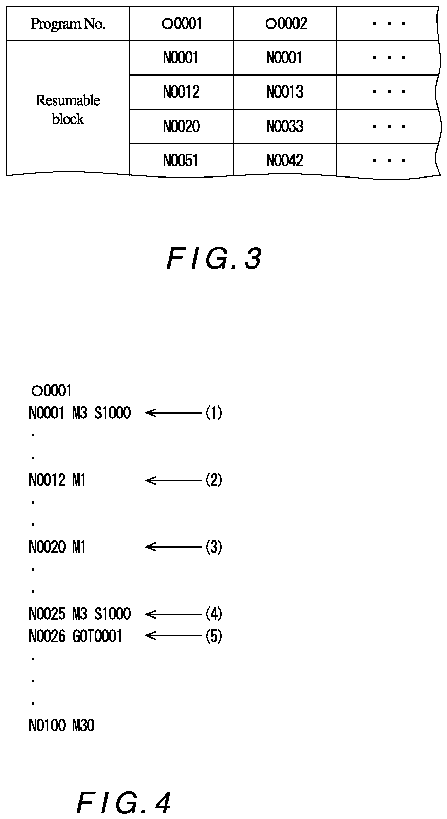

0032 The program storage 16 is a functional unit that stores an NC program created for machining. The program storage 16 stores an NC program input through the input device 22 and the input and output control unit 11 as described above. Note that the NC program is constituted by a plurality of blocks describing NC codes. For example, the NC program has a structure as shown in FIG. 4. Each block is defined by a sequence number that is represented by a serial number preceded by the letter N.

0033 The resumable condition storage 17 is a functional unit that stores a block from which the NC program under execution can be resumed after suspension, namely, the sequence number of the block. The resumable condition storage 17 stores the above-mentioned data input through the input device 22 and the input and output control unit 11 in the form of a data table. FIG. 3 shows an example of this data table stored in the resumable condition storage 17. In FIG. 3, resumable blocks (sequence numbers) set in advance for each NC program are shown. Note that "O0001" and "00002" are each a program number.

0034 The input and output control unit 11 selectively transmits an operation signal input from the input device 22 to a corresponding processing unit, i.e., to any one of the suspending operation unit 12, automatic-operation control unit 13, automatic-operation monitoring unit 14, and program manipulation unit 15.

0035 The program manipulation unit 15 executes an operation upon receiving an operation signal input through the input device 22 and the input and output control unit 11. For example, upon receiving an NC program input operation signal from the input device 22 and the input and output control unit 11, the program manipulation unit 15 subsequently executes an operation of storing into the program storage 16 the NC program input from the input device 22 and the input and output control unit 11.

0036 Upon receiving an NC program manipulation signal from the input device 22 and the input and output control unit 11, the program manipulation unit 15 executes an operation of displaying the corresponding NC program on the display device 21 via the input and output control unit 11, enabling manipulation of character display on the display device 21 with a displayed character designated or editing of the NC program, and after the NC program is modified, updating the NC program stored in the program storage 16 with the modified NC program. This program manipulation can be executed when processing in the automatic-operation control unit 13 is not being executed or when the processing in the automatic-operation control unit 13 is suspended.

0037 Upon receiving an NC program execution operation signal, which is for executing the NC program displayed on the display device 21 via the input and output control unit 11, from the input device 22 and the input and output control unit 11 under the processing by the program manipulation unit 15, the automatic-operation control unit 13 sequentially reads out the corresponding NC program in the block order from the program storage 16 to execute the NC program, whereby the motion mechanism unit 25 operates under numerical control. In this process, the block under execution is recognizably displayed on the display device 21 via the input and output control unit 11. By way of example, the block under execution in the NC program displayed on the display device 21 may be underlined or may be displayed in a black-and-white inverted manner.

0038 Upon receiving an NC program execution suspension signal, which is for suspending the execution of the NC program by the automatic-operation control unit 13, from the input device 22 via the input and output control unit 11 during the execution of the NC program by the automatic-operation control unit 13, the suspending operation unit 12 transmits a suspension signal to the automatic-operation control unit 13 to suspend the processing in the automatic-operation control unit 13. Further, upon receiving an automatic-operation resumption signal (command) from the input device 22 via the input and output control unit 11, the suspending operation unit 12 transmits an automatic-operation resumption signal to the automatic-operation control unit 13 to allow resumption of the processing in the automatic-operation control unit 13. The suspension signal and automatic-operation resumption signal input from the input device 22 are also transmitted to the automatic-operation monitoring unit 14, which is described below, via the input and output control unit 11.

0039 The automatic-operation monitoring unit 14 monitors the state of the execution in the automatic-operation control unit 13. When the execution of the NC program is to be resumed after the execution of the NC program is suspended by the suspending operation unit 12, the automatic-operation monitoring unit 14 checks whether a resumption block that contains a character designated in the program manipulation unit 15 immediately before the resumption is a preset resumable block or not. When the resumption block is the resumable block, the automatic-operation monitoring unit 14 resumes the processing in the automatic-operation control unit 13 from the resumption block. When the resumption block is not the resumable block, the automatic-operation monitoring unit 14 halts the processing in the automatic-operation control unit 13.

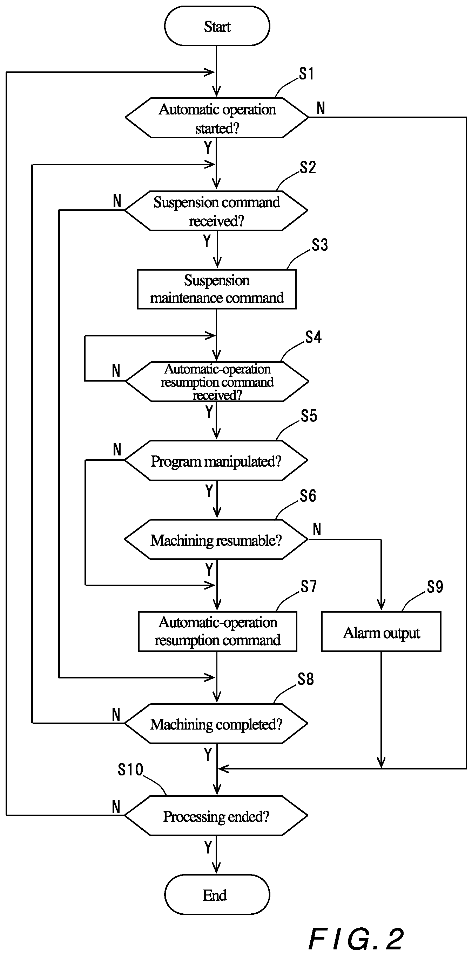

0040 Specifically, the automatic-operation monitoring unit 14 executes the process shown in FIG. 2. The automatic-operation monitoring unit 14 starts the process once the numerical control apparatus 10 is activated. The automatic-operation monitoring unit 14 monitors whether the processing in the automatic-operation control unit 13 is started (step S1). Once the processing in the automatic-operation control unit 13 is started, the automatic-operation monitoring unit 14 subsequently monitors whether the suspension signal is input from the input device 22, in other words, whether the processing in the automatic-operation control unit 13 is suspended by the suspension signal being transmitted from the input device 22 to the suspending operation unit 12 (step S2).

0041 Upon confirming in the step S2 that the suspension signal is input, the automatic-operation monitoring unit 14 transmits a suspension maintenance command (signal) to the automatic-operation control unit 13 (step S3) to cause the automatic-operation control unit 13 to maintain the suspended state. That is to say, upon receiving the suspension maintenance command, the automatic-operation control unit 13 maintains the suspended state. During the maintenance, the automatic-operation control unit 13 maintains the suspended state even when the automatic-operation resumption command is input from the input device 22 and input via the input and output control unit 11 and the suspending operation unit 12.

0042 Next, the automatic-operation monitoring unit 14 monitors via the input and output control unit 11 whether the automatic-operation resumption signal is input from the input device 22 (step S4). Upon confirming that the automatic-operation resumption signal is input (step S4), the automatic-operation monitoring unit 14 subsequently checks based on the state of the processing by the program manipulation unit 15 whether the program being executed by the automatic-operation control unit 13 was manipulated or not (step S5). When the program was not operated, the automatic-operation monitoring unit 14 transmits an automatic-operation resumption signal to the automatic-operation control unit 13 to resume the processing in the automatic-operation control unit 13 (step S7).

0043 On the other hand, upon confirming in the step S5 that the program under execution was manipulated, the automatic-operation monitoring unit 14 subsequently recognizes, based on the state of the display on the display device 21, the resumption block designated at the time of the input of the automatic-operation resumption signal, that is to say, recognizes as the resumption block the block containing the character designated on the display device 21 under the processing by the program manipulation unit 15, and checks, by referring to the data stored in the resumable condition storage 17, whether the recognized resumption block is a preset resumable block or not (step S6). When the resumption block is the resumable block, the automatic-operation monitoring unit 14 executes the operation in the step S7. When the resumption block is not the resumable block, the automatic-operation monitoring unit 14 displays an alarm on the display device 21 via the input and output control unit 11 (step S9).

0044 For example, in a case where the processing in the automatic-operation control unit 13 was suspended by the suspension signal being input during the execution of the NC program shown in FIG. 4 by the automatic-operation control unit 13 and the NC program under execution was manipulated under the processing by the program manipulation unit 15 during the suspension, if the NC program is to be resumed from the position (1) in FIG. 4, the automatic-operation monitoring unit 14 checks (determines), by referring to the data shown in FIG. 3 stored in the resumable condition storage 17, whether the "sequence number N0001" is a resumable block or not. In this case, the "sequence number N0001" is a resumable block. Therefore; the automatic operation by the automatic-operation control unit 13 is resumed.

0045 In the example shown in FIG. 3, the "sequence number N0012", the "sequence number N0020", and the "sequence number N0051" are each a resumable block besides the above-mentioned "sequence number N0001". Therefore, for example, resumption of the automatic operation from the block indicated by (2) or the block indicated by (3) in FIG. 4 is permitted by the automatic-operation monitoring unit 14. On the other hand, the "sequence number N0025" and the "sequence number N0026" are not a resumable block. Therefore, for example, resumption of the automatic operation from the block indicated by (4) or the block indicated by (5) in FIG. 4 is rejected by the automatic-operation monitoring unit 14. Note that the "sequence number N0001" is always a resumable block since it is located at the beginning of the NC program.

0046 After executing the operation in the step S7, the automatic-operation monitoring unit 14 repeatedly executes the operations in the step S1 and the subsequent steps until the machining is completed. After the machining is completed, the automatic-operation monitoring unit 14 repeatedly executes the operations in the step S1 and the subsequent steps until the processing in the numerical control apparatus 10 is ended.

0047 In the numerical control apparatus 10 according to this embodiment having the above-described configuration, once an operation signal for an execution command is input from the input device 22, the NC program displayed on the display device 21 under the processing by the program manipulation unit 15 is executed by the automatic-operation control unit 13. The state of the operation signal input from the input device 22 and the state of the processing in the automatic-operation control unit 13 are monitored by the automatic-operation monitoring unit 14.

0048 If the suspension signal is transmitted from the input device 22 to the suspending operation unit 12 to cause the suspending operation unit 12 to suspend the processing in the automatic-operation control unit 13 during the execution of the NC program by the automatic-operation control unit 13, the automatic-operation monitoring unit 14 subsequently transmits the suspension maintenance command (signal) to the automatic-operation control unit 13 to cause the automatic-operation control unit 13 to maintain the suspended state.

0049 In this state, the automatic-operation monitoring unit 14 monitors via the input and output control unit 11 whether the automatic-operation resumption command (signal) is input from the input device 22. Upon confirming that the automatic-operation resumption command is input, the automatic-operation monitoring unit 14 subsequently checks based on the state of the processing by the program manipulation unit 15 whether the program being executed by the automatic-operation control unit 13 was manipulated or not. When the program was not operated, the automatic-operation monitoring unit 14 transmits the automatic-operation resumption command to the automatic-operation control unit 13 to resume the processing in the automatic-operation control unit 13.

0050 On the other hand, upon confirming that the program under execution was manipulated, the automatic-operation monitoring unit 14 recognizes, based on the state of the display on the display device 21, the resumption block designated at the time of the input of the automatic-operation resumption command, and checks, by referring to the data stored in the resumable condition storage 17, whether the recognized resumption block is a preset resumable block or not. When the resumption block is the resumable block, the automatic-operation monitoring unit 14 transmits the automatic-operation resumption command to the automatic-operation control unit 13 to resume the processing in the automatic-operation control unit 13. When the resumption block is not the resumable block, the automatic-operation monitoring unit 14 displays an alarm on the display device 21 via the input and output control unit 11.

0051 Thus, in the numerical control apparatus 10 according to this embodiment, the automatic-operation monitoring unit 14 monitors the execution state of the automatic-operation control unit 13. At the time of resumption of the execution of the NC program after suspension of the execution of the NC program, the automatic-operation monitoring unit 14 checks whether the resumption block is the resumable block or not. Accordingly, the machining is resumed only when the resumption block is the resumable block. Thereby, for example, interference between the tool and the workpiece is reliably avoided even if there is an error in the machining resuming operation performed by the operator.

0052 Further, in the numerical control apparatus 10 according to this embodiment, the determination whether the resumption block is the resumable block or not is made without relying on the operator's judgment. Therefore, the operator does not need to be familiar with the machining processes to be executed in the machine tool 1. Further, in the numerical control apparatus 10 according to this embodiment, an alarm is displayed (output) on the display device 21 when the resumption block is not the resumable block. Therefore, the operator can immediately recognize that he/she has made an operational error. In this case, the operator can take measures such as executing the NC program from the beginning.

0053 Further, in the numerical control apparatus 10 according to this embodiment, the resumable block information is set in advance and stored in the resumable condition storage 17. Therefore, the automatic-operation monitoring unit 14 can quickly checks whether the resumption block is the resumable block or not.

0054 Above has been described a specific embodiment of the present invention. However, it should be noted that the present invention is not limited to the above-described embodiment and can be implemented in other manners.

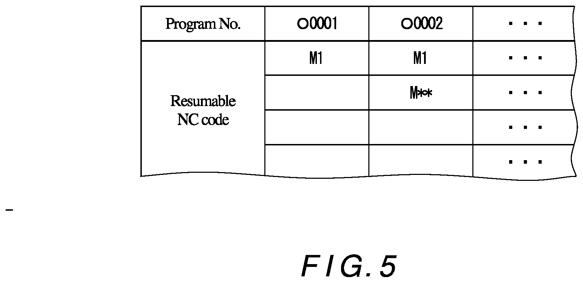

0055 For example, in the above-described embodiment, the sequence number (N number) that defines the block itself, i.e., a unique value of the block, is used for setting the resumable block. However, the present invention is not limited thereto. The determination whether the resumption block is the resumable block or not can be made on the basis of a particular NC code. FIG. 5 shows an example of this aspect. In the example shown in FIG. 5, an M code, e.g., "M1", is used as an NC code for defining the resumable block. The NC code information is set for each NC program and stored in the resumable condition storage 17.

0056 In this case, the automatic-operation monitoring unit 14 recognizes, based on the state of the display on the display device 21, the resumption block designated at the time of the input of the automatic-operation resumption command, and checks, by referring to the data stored in the resumable condition storage 17, whether the recognized resumption block contains the NC code set as a resumable NC code or not. When the resumption block contains the resumable NC code, the automatic-operation monitoring unit 14 transmits the automatic-operation resumption command to the automatic-operation control unit 13 to resume the processing in the automatic-operation control unit 13. When the resumption block does not contain the resumable NC code, i.e., when the resumption block is not a resumable block, the automatic-operation monitoring unit 14 displays an alarm on the display device 21 via the input and output control unit 11.

0057 Note that the code "M1" means an optional stop. The automatic operation is suspended in an operation mode in which this optional stop "M1" is enabled. Therefore, resumption of the automatic operation from the code "M1" avoids interference between the tool and the workpiece. Therefore, in this example, the code "M1" is used as an NC code for defining that the automatic-operation is resumable. The NC code for defining that the automatic-operation is resumable is not limited to the code "M1" and, as a matter of course, other suitable NC codes can be used to define that the automatic-operation is resumable.

0058 In the above-described embodiment, the automatic-operation monitoring unit 14 and the resumable condition storage 17 are configured as separate functional units. However, these may be configured to be regarded as one functional unit.

0059 As already mentioned above, the foregoing description of the embodiments is not limitative but illustrative in all aspects. One skilled in the art would be able to make variations and modifications as appropriate. The scope of the invention is not defined by the above-described embodiments, but is defined by the appended claims. Further, the scope of the invention encompasses all modifications made from the embodiments within a scope equivalent to the scope of the claims. Reference Signs List

0060
- 1: Machine tool
- 10: Numerical control apparatus
- 11: Input and output control unit
- 12: Suspending operation unit
- 13: Automatic-operation control unit
- 14: Automatic-operation monitoring unit
- 15: Program manipulation unit
- 16: Program storage
- 17: Resumable condition storage
- 20: Input and output device
- 21: Display device
- 22: Input device
- 25: Motion mechanism unit

## Claims

1. A numerical control apparatus numerically controlling a motion mechanism unit of a machine tool, comprising:
a program storage storing an NC program constituted by a plurality of blocks describing NC codes;
a display device configured to display at least the NC program in characters;
an automatic-operation control unit configured to execute the NC program stored in the program storage to operate the motion mechanism unit under numerical control;
a suspending operation unit configured to suspend execution of the NC program by the automatic-operation control unit during the execution of the NC program and then resume the execution of the NC program; and
a program manipulation unit configured to, when processing in the automatic-operation control unit is suspended by the suspending operation unit, with respect to the NC program under execution displayed on the display device, enable manipulation of character display on the display device with a displayed character designated or enable editing of the NC program, **characterized in that**:
the numerical control apparatus includes an automatic-operation monitoring unit configured to: monitor an execution state of the automatic-operation control unit; at a time of resumption of the execution of the NC program after suspension of the execution of the NC program by the suspending operation unit, check whether a resumption block containing a character designated in the program manipulation unit immediately before the resumption is a preset resumable block or not; when the resumption block is the resumable block, resume the processing in the automatic-operation control unit from the resumption block; and when the resumption block is not the resumable block, halt the processing in the automatic-operation control unit.

2. The numerical control apparatus according to claim 1, **characterized in that**:
the numerical control apparatus further includes a storage storing an automatic-operation resumable block set in advance for the NC program to be executed; and
the automatic-operation monitoring unit is configured to, at the time of resumption of the execution of the NC program by the automatic-operation control unit, compare the resumption block with the resumable block stored in the storage and determine that the resumption block is the resumable block when the resumption block matches the resumable block stored in the storage.

3. The numerical control apparatus according to claim 1, **characterized in that**:
the numerical control apparatus further includes a storage storing an NC code defined as an automatic-operation resumable code and set in advance for the NC program to be executed; and
the automatic-operation monitoring unit is configured to, at the time of resumption of the execution of the NC program by the automatic-operation control unit, check whether the resumption block contains the NC code stored in the storage or not and determine that the resumption block is the resumable block when the resumption block contains the NC code stored in the storage.

4. The numerical control apparatus according to any one of claims 1 to 3, **characterized in that** the automatic-operation monitoring unit is further configured to output an alarm to outside when the resumption block is not the resumable block.
